# EUROPEAN PATENT APPLICATION

(11) **EP 4 579 565 A1**
(43) Date of publication of application: **02.07.2025**
(21) Application number: 24223151.2
(22) Date of filing: 24.12.2024
(51) Int. Cl.: G06Q 40/12, G06Q 30/04

(54) **MACHINE LEARNING BASED SYSTEMS AND METHODS FOR DATA MAPPING FOR REMITTANCE DOCUMENTS**

(30) Priority: 27.12.2023 US 202318396763
(71) Applicant: Highradius Corporation, Houston, TX 77042 (US)
(72) Inventor: Bose, Debanwesh, 500081 Hyderabad (IN); Maripina, Hashwanth, 500081 Hyderabad (IN); Jain, Vipul, 500081 Hyderabad (IN); Ahmad, Rehan, 500081 Hyderabad (IN); Kumar, Aishwarya, 500081 Hyderabad (IN)
(74) Representative: Ricker, Mathias

(57) **Abstract**

A machine learning based computing method for automatic data mapping for electronic documents (e.g., remittance documents or documents including remittance information) is disclosed. The machine learning based computing method includes: receiving electronic documents from first databases; extracting data comprising first information from the electronic documents based on OCR conversion process; determining first linkage values for the first information by correlating the first information with metadata extracted from the first information based on a machine learning model; mapping second linkage values with linkage keys in second databases; mapping first pairs associated with the second linkage values and the linkage keys, with second pairs associated with end-state values and end-state keys in the second databases; updating the second databases by adjusting payments associated with the first information; and providing an output of the second databases with the adjusted payments to first users on a user interface associated with electronic devices.

## Description

### FIELD OF INVENTION

Embodiments of the present disclosure relate to machine learning based (ML-based) computing systems, and more particularly relates to a ML-based computing method and system for data mapping for one or more electronic documents (e.g., one or more remittance documents or documents including remittance information).

### BACKGROUND

In the standard workflow of an accounts receivables department, the first stage involves receiving a remittance document, which may be presented in one or more formats including at least one of: paper checks with attached remittance advice, electronic payment notifications, and payment confirmations delivered through an electronic mail. Subsequently, the second stage involves initiating a payment process or a cash application process by a collection personnel. During the second stage, a thorough examination of the remittance document is undertaken to verify the presence of essential information. This includes confirming details including at least one of: customer's name and account number, payment amount and currency, payment date, as well as any pertinent invoice numbers or references necessary for accurately identifying specific invoices or accounts being paid.

Following that, the third stage encompasses mapping of payments to invoices within the payment process or the cash application process. The objective at this third stage is to align the received payments with the corresponding invoices or entries in the company's accounts receivable records. This pivotal reconciliation step guarantees an accurate allocation of payments to the relevant customer accounts, thereby averting misallocations and discrepancies in financial records. Ultimately, the fourth stage involves the update of the accounting system or accounting reconciliation. During this process, the payment details are precisely input into the system, encompassing the recording of the payment amount, adjustments to accounts receivable balances, and the marking of pertinent invoices as paid.

A major limitation of current software solutions employed in this workflow is their incapacity to autonomously associate a document number in the remittance document with accounts receivable data. Despite the presence of the essential information in the remittance document, the process heavily depends on manual efforts to manually cross-reference and link document numbers to the corresponding entries in the accounts receivable data. This manual mapping process is not only time-intensive but is also susceptible to errors, as human operators may overlook or misinterpret vital information. Such errors may lead to delays in record updates, misallocation of funds, and discrepancies in reconciliation.

Hence, there is a need for an improved machine learning based (ML-based) computing system and method for automatic data mapping for one or more electronic documents, in order to address the aforementioned issues.

### SUMMARY

This summary is provided to introduce a selection of concepts, in a simple manner, which is further described in the detailed description of the disclosure. This summary is neither intended to identify key or essential inventive concepts of the subject matter nor to determine the scope of the disclosure.

In accordance with an embodiment of the present disclosure, a machine-learning based (ML-based) computing method for automatic data mapping for one or more electronic documents, is disclosed. The ML-based computing method comprises receiving, by one or more hardware processors, one or more electronic documents from one or more first databases.

The ML-based computing method further comprises extracting, by the one or more hardware processors, one or more data comprising one or more first information from the one or more electronic documents based on an optical character recognition (OCR) conversion process.

The ML-based computing method further comprises determining, by the one or more hardware processors, one or more first linkage values for the one or more first information associated with the one or more electronic documents by correlating each information of the one or more first information with one or more metadata extracted from the one or more first information, based on a machine learning model.

The ML-based computing method further comprises mapping, by the one or more hardware processors, one or more second linkage values with one or more linkage keys, in one or more second databases by: (a) determining, by the one or more hardware processors, whether the one or more first linkage values are matched with the one or more second linkage values in the one or more second databases, based on a fuzzy string matching technique; (b) determining, by the one or more hardware processors, the one or more linkage keys by analyzing one or more columns in the one or more second databases where the one or more first linkage values are matched with the one or more second linkage values; and (c) mapping, by the one or more hardware processors, the one or more second linkage values with the one or more linkage keys.

The ML-based computing method further comprises mapping, by the one or more hardware processors, one or more first pairs associated with at least one of: the one or more second linkage values and the one or more linkage keys with one or more second pairs associated with at least one of: one or more end-state values and one or more end-state keys in the one or more second databases.

The ML-based computing method further comprises updating, by the one or more hardware processors, the one or more second databases by adjusting one or more payments associated with the one or more first information based on mapping of the one or more first pairs associated with at least one of: the one or more second linkage values and the one or more linkage keys, with the one or more second pairs associated with at least one of: the one or more end-state values and the one or more end-state keys in the one or more second databases.

The ML-based computing method further comprises providing, by the one or more hardware processors, an output of the updated one or more second databases with the adjusted one or more payments associated with the one or more first information to one or more first users on a user interface associated with one or more electronic devices.

In an embodiment, extracting the one or more data comprising the one or more first information associated with the one or more electronic documents, comprises: (a) extracting, by the one or more hardware processors, the one or more first information in form of at least one of: one or more fields, one or more headers, one or more keywords, and one or more key numbers, within the one or more electronic documents by analyzing a spatial layout of the one or more first information, based on at least one of: one or more positions, one or more patterns, and one or more locations, of the one or more first information within the one or more electronic documents; and (b) extracting, by the one or more hardware processors, the one or more metadata related to one or more coordinates associated with the one or more first information within the one or more electronic documents.

The one or more first information comprise at least one of: one or more second users associated with the one or more electronic documents, one or more vendors linked to the one or more electronic documents, one or more invoice numbers, one or more invoice amounts corresponding to the one or more invoice numbers, one or more invoice dates, one or more payment details, one or more payment dates, one or more credit and one or more debit numbers, one or more check numbers, and one or more account numbers associated with the one or more electronic documents.

The one or more metadata related to the one or more coordinates associated with the one or more first information comprise at least one of: one or more top coordinates of one or more pages, one or more bottom coordinates of the one or more pages, one or more left coordinates of the one or more pages, one or more right coordinates of the one or more pages, one or more rows on the one or more pages, one or more sections on the one or more pages, one or more characters present in the one or more pages, one or more top coordinates of the one or more first information, one or more bottom coordinates of one or more first information, one or more left coordinates of the one or more first information, one or more right coordinates of the one or more first information, one or more distances of the one or more first information from a left side of the one or more pages, one or more distances of the one or more first information from a top of the one or more pages, one or more row numbers of the one or more first information.

In another embodiment, determining, by the machine learning model, the one or more first linkage values for the one or more first information associated with the one or more electronic documents, comprises: (a) generating, by the one or more hardware processors, one or more confidence scores for each information of the one or more first information in the one or more electronic documents; and (b) labelling, by the one or more hardware processors, the one or more first information to classify the one or more first information into at least one of: the one or more first linkage values and one or more second information, based on the one or more confidence scores generated for each information of the one or more first information by one or more predetermined threshold values. The one or more second information are distinct from the one or more first information.

In yet another embodiment, the one or more first information are classified as the one or more second information when the one or more confidence scores for the one or more first information, are within the one or more predetermined threshold values. The one or more first information are classified as the one or more first linkage values when the one or more confidence scores for the one or more first information, exceed the one or more predetermined threshold values.

In yet another embodiment, determining, by the machine learning model, the one or more first linkage values for the one or more first information associated with the one or more electronic documents, comprises generating, by the one or more hardware processors, one or more data objects comprising the one or more confidence scores generated for each information of the one or more first information in the one or more electronic documents. When a single first information with the one or more confidence scores exceeds the one or more predetermined threshold values, the one or more second linkage values are mapped with the one or more linkage keys in the one or more second databases. When two or more first information with the one or more confidence scores exceed the one or more predetermined threshold values, the one or more second linkage values are mapped with the one or more linkage keys in the one or more second databases.

In yet another embodiment, when a single linkage key is determined in the one or more second databases, the one or more pairs of the single linkage key and the one or more linkage values comprising the one or more confidence scores are mapped with the one or more second pairs associated with at least one of: the one or more end-state values and the one or more end-state keys in the one or more second databases. When two or more linkage keys are determined in the one or more second databases, the one or more pairs of a linkage key and a corresponding linkage value comprising one or more optimum confidence scores are mapped with the one or more second pairs associated with at least one of: the one or more end-state values and the one or more end-state keys in the one or more second databases.

In yet another embodiment, the ML-based computing method further comprises training, by the one or more hardware processors, the machine learning model, by: (a) obtaining, by the one or more hardware processors, one or more labelled datasets from the one or more first databases; (b) selecting, by the one or more hardware processors, one or more features vectors associated with at least one of: the one or more first information extracted from the one or more electronic documents and the metadata extracted from the one or more first information; (c) labelling, by the one or more hardware processors, the one or more first information to classify the one or more first information into at least one of: the one or more first linkage values and the one or more second information, based on one or more pre-configured rules and parameters; (d) segmenting, by the one or more hardware processors, the one or more labelled datasets into at least one of: one or more training datasets and one or more validation datasets; (e) training, by the one or more hardware processors, the machine learning model to correlate the one or more feature vectors associated with at least one of: the one or more first information and the metadata, with the one or more first linkage values, based on one or more hyperparameters; and (e) generating, by the one or more hardware processors, the one or more confidence scores for the one or more first linkage values, based on the trained machine learning model.

The one or more labelled datasets comprise the one or more first information extracted from the one or more electronic documents. The machine learning model comprises a random forest based machine learning model. The one or more hyperparameters comprise at least one of: max_depth, class_weight, n_estimators, criterion, min_samples_split, max_features, min_samples_leaf, and bootstrap.

The max_depth hyperparameter is configured to control an optimum depth of each decision tree in the random forest based machine learning model. The class_weight hyperparameter is configured to adjust one or more weights of one or more classes in the random forest based machine learning model to control one or more class imbalance errors. The n_estimators hyperparameter is configured to indicate a number of one or more decision trees to be included in the random forest based machine learning model. The criterion hyperparameter is configured to determine quality of a split when the one or more decision trees are generated within the random forest based machine learning model.

The min_samples_split hyperparameter is configured to set a pre-determined number of one or more data points required in a node before the one or more data points split during a tree-building process. The max_features hyperparameter is configured to determine an optimum number of features when the optimum split at each node in the random forest based machine learning model. The min _samples_leaf hyperparameter is configured to indicate the pre-determined number of one or more data points required to generate a leaf node during the tree-building process. The bootstrap hyperparameter is configured to control whether the one or more data points are sampled when one or more individual decision trees are generated in the random forest based machine learning model.

In yet another embodiment, the ML-based computing method further comprises validating, by the one or more hardware processors, the machine learning model based on the one or more validation datasets by determining, by the one or more hardware processors, whether one or more metric scores attained by the trained machine learning model, exceeds one or more pre-determined threshold values. The one or more metric scores are associated with one or more validation metrics comprising at least one of: precision metric, recall metric, F1-score metric, and confusion metric.

In yet another embodiment, the ML-based computing method further comprises adjusting, by the one or more hardware processors, the one or more hyperparameters to fine-tune the machine learning model based on one or more results of validation of the machine learning model.

In yet another embodiment, the ML-based computing method further comprises re-training, by the one or more hardware processors, the machine learning model over a plurality of time intervals based on one or more training data, by: (a) receiving, by the one or more hardware processors, the one or more training data associated with at least one of: the one or more first information extracted from the one or more electronic documents and the metadata extracted from the one or more first information; (b) adding, by the one or more hardware processors, the one or more training data with the one or more training datasets to generate one or more updated training datasets; (c) re-training, by the one or more hardware processors, the machine learning model to correlate the one or more feature vectors associated with at least one of: the one or more first information and the metadata, with the one or more first linkage values; and (d) executing, by the one or more hardware processors, the re-trained machine learning model in a linkage value determining subsystem to determine the one or more first linkage values for the one or more first information associated with the one or more electronic documents. The one or more confidence scores are generated based on re-training the machine learning model.

In one aspect, a machine learning based (ML-based) computing system for automatic data mapping for one or more electronic documents, is disclosed. The ML-based computing system includes one or more hardware processors and a memory coupled to the one or more hardware processors. The memory includes a plurality of subsystems in the form of programmable instructions executable by the one or more hardware processors.

The plurality of subsystems comprises a data receiving subsystem configured to receive one or more electronic documents from one or more first databases.

The plurality of subsystems further comprises a data extraction subsystem configured to extract one or more data comprising one or more first information from the one or more electronic documents based on an optical character recognition (OCR) conversion process.

The plurality of subsystems further comprises a linkage value determining subsystem configured to determine one or more first linkage values for the one or more first information associated with the one or more electronic documents by correlating each information of the one or more first information with one or more metadata extracted from the one or more first information, based on a machine learning model.

The plurality of subsystems further comprises a linkage key-value pair mapping subsystem configured to map one or more second linkage values with one or more linkage keys, in one or more second databases by: (a) determining whether the one or more first linkage values are matched with the one or more second linkage values in the one or more second databases, based on a fuzzy string matching technique; (b) determining the one or more linkage keys by analyzing one or more columns in the one or more second databases where the one or more first linkage values are matched with the one or more second linkage values; and (c) mapping the one or more second linkage values with the one or more linkage keys.

The plurality of subsystems further comprises an end state mapping subsystem configured to map one or more first pairs associated with at least one of: the one or more second linkage values and the one or more linkage keys, with one or more second pairs associated with at least one of: one or more end-state values and one or more end-state keys in the one or more second databases.

The plurality of subsystems further comprises a database updating subsystem configured to update the one or more second databases by adjusting one or more payments associated with the one or more first information based on mapping of the one or more first pairs associated with at least one of: the one or more second linkage values and the one or more linkage keys, with the one or more second pairs associated with at least one of: the one or more end-state values and the one or more end-state keys in the one or more second databases.

The plurality of subsystems further comprises an output subsystem configured to provide an output of the updated one or more second databases with the adjusted one or more payments associated with the one or more first information to one or more first users on a user interface associated with one or more electronic devices.

In another aspect, a non-transitory computer-readable storage medium having instructions stored therein that, when executed by a hardware processor, causes the processor to perform method steps as described above.

To further clarify the advantages and features of the present disclosure, a more particular description of the disclosure will follow by reference to specific embodiments thereof, which are illustrated in the appended figures. It is to be appreciated that these figures depict only typical embodiments of the disclosure and are therefore not to be considered limiting in scope. The disclosure will be described and explained with additional specificity and detail with the appended figures.

### BRIEF DESCRIPTION OF DRAWINGS

The disclosure will be described and explained with additional specificity and detail with the accompanying figures in which:
**FIG. 1** is a block diagram illustrating a computing environment with a machine learning based (ML-based) computing system for automatic data mapping for one or more electronic documents, in accordance with an embodiment of the present disclosure;
**FIG. 2** is a detailed view of the ML-based computing system for automatic data mapping for the one or more electronic documents, in accordance with another embodiment of the present disclosure;
**FIG. 3** is an overall process flow of automatic data mapping for the one or more electronic documents, in accordance with another embodiment of the present disclosure;
**FIG. 4** is a process flow of training a random forest based machine learning model for automatic data mapping for the one or more electronic documents, in accordance with an embodiment of the present disclosure;
**FIGS. 5A** and **5B** are exemplary electronic documents used to train the machine learning model, to extract one or more first information (e.g., one or more remittance information), and to map the one or more first information, in accordance with an embodiment of the present disclosure;
**FIG. 6** is an exemplary representation depicting the automatic data mapping for the one or more electronic documents to update one or more second databases (e.g., accounts receivables database records), in accordance with an embodiment of the present disclosure; and
**FIG. 7** is an flow chart illustrating a machine-learning based (ML-based) computing method for automatic data mapping for the one or more electronic documents, in accordance with an embodiment of the present disclosure.

Further, those skilled in the art will appreciate that elements in the figures are illustrated for simplicity and may not have necessarily been drawn to scale. Furthermore, in terms of the construction of the device, one or more components of the device may have been represented in the figures by conventional symbols, and the figures may show only those specific details that are pertinent to understanding the embodiments of the present disclosure so as not to obscure the figures with details that will be readily apparent to those skilled in the art having the benefit of the description herein.

### DETAILED DESCRIPTION OF THE DISCLOSURE

For the purpose of promoting an understanding of the principles of the disclosure, reference will now be made to the embodiment illustrated in the figures and specific language will be used to describe them. It will nevertheless be understood that no limitation of the scope of the disclosure is thereby intended. Such alterations and further modifications in the illustrated system, and such further applications of the principles of the disclosure as would normally occur to those skilled in the art are to be construed as being within the scope of the present disclosure. It will be understood by those skilled in the art that the foregoing general description and the following detailed description are exemplary and explanatory of the disclosure and are not intended to be restrictive thereof.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

The terms "comprise", "comprising", or any other variations thereof, are intended to cover a non-exclusive inclusion, such that one or more devices or sub-systems or elements or structures or components preceded by "comprises... a" does not, without more constraints, preclude the existence of other devices, sub-systems, additional sub-modules. Appearances of the phrase "in an embodiment", "in another embodiment" and similar language throughout this specification may, but not necessarily do, all refer to the same embodiment.

Unless otherwise defined, all technical and scientific terms used herein have the same meaning as commonly understood by those skilled in the art to which this disclosure belongs. The system, methods, and examples provided herein are only illustrative and not intended to be limiting.

A computer system (standalone, client or server computer system) configured by an application may constitute a "module" (or "subsystem") that is configured and operated to perform certain operations. In one embodiment, the "module" or "subsystem" may be implemented mechanically or electronically, so a module includes dedicated circuitry or logic that is permanently configured (within a special-purpose processor) to perform certain operations. In another embodiment, a "module" or "subsystem" may also comprise programmable logic or circuitry (as encompassed within a general-purpose processor or other programmable processor) that is temporarily configured by software to perform certain operations.

Accordingly, the term "module" or "subsystem" should be understood to encompass a tangible entity, be that an entity that is physically constructed, permanently configured (hardwired) or temporarily configured (programmed) to operate in a certain manner and/or to perform certain operations described herein.

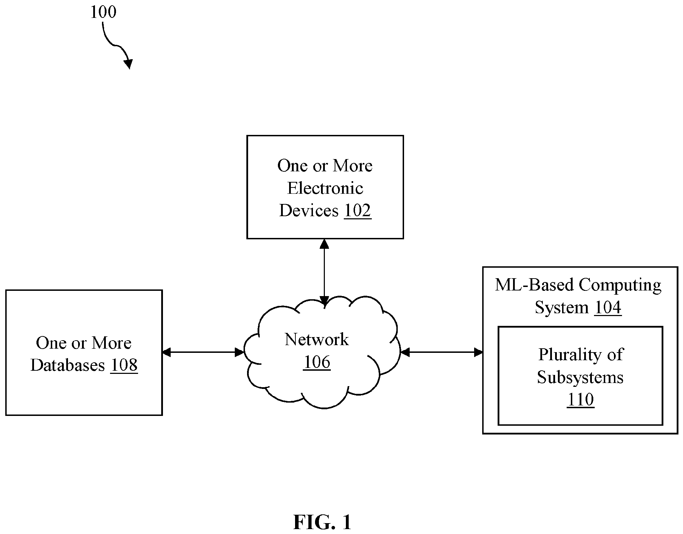

Referring now to the drawings, and more particularly to FIG. 1 through FIG. 7, where similar reference characters denote corresponding features consistently throughout the figures, there are shown preferred embodiments and these embodiments are described in the context of the following exemplary system and/or method.

**FIG. 1** is a block diagram illustrating a computing environment 100 with a machine learning based (ML-based) computing system 104 for automatic data mapping for one or more electronic documents (e.g., one or more remittance documents or documents including remittance information), in accordance with an embodiment of the present disclosure. According to **FIG. 1****,** the computing environment 100 includes one or more electronic devices 102 that are communicatively coupled to the ML-based computing system 104 through a network 106. The one or more electronic devices 102 through which one or more first users provide one or more inputs to the ML-based computing system 104.

In an embodiment, the one or more first users may include at least one of: one or more data analysts, one or more business analysts, one or more cash analysts, one or more financial analysts, one or more collection analysts, one or more debt collectors, one or more professionals associated with cash and collection management, and the like.

The present invention is configured to automatically update the one or more second databases (e.g., one or more databases accessed by the one or more first users) by adjusting one or more payments associated with the one or more first information, to the one or more first users through a user interface associated with the one or more electronic devices 102. The ML-based computing system 104 is initially configured to receive one or more electronic documents from one or more first databases 108.

The one or more electronic documents may include, but not limited to, one or more scanned documents, one or more scanned images, one or more image files (e.g., one or more Joint Photographic Experts Group (JPEG) files, one or more Portable Network Graphics (PNG), one or more Graphics Interchange Format files, and the like), one or more Portable Document Format (PDF) files, one or more text files (e.g., one or more Word files, one or more Notepad files, and the like), one or more spreadsheet files (e.g., one or more Excel files), and the like. In some embodiments, the one or more electronic documents may be received in one or more electronic mails and scanned into the ML-based computing system 104. Alternatively, the one or more electronic documents may be received as an attachment to the one or more electronic mails. In some embodiments, the one or more electronic documents may include at least one of: a company invoice, a payment for an invoice, an invoice from a vendor, a receipt for a payment, a check from a customer, and the like.

The ML-based computing system 104 is further configured to extract one or more data including one or more first information from the one or more electronic documents based on an optical character recognition (OCR) conversion process. The ML-based computing system 104 is further configured to determine one or more first linkage values for the one or more first information associated with the one or more electronic documents by correlating each information of the one or more first information with one or more metadata extracted from the one or more first information, based on a machine learning model.

The ML-based computing system 104 is further configured to map one or more second linkage values with one or more linkage keys, in the one or more second databases by (a) determining whether the one or more first linkage values are matched with the one or more second linkage values in the one or more second databases, based on a fuzzy string matching technique, (b) determining the one or more linkage keys by analyzing one or more columns in the one or more second databases where the one or more first linkage values are matched with the one or more second linkage values, and (c) mapping the one or more second linkage values with the one or more linkage keys.

The ML-based computing system 104 is further configured to map one or more first pairs associated with at least one of: the one or more second linkage values and the one or more linkage keys, with one or more second pairs associated with at least one of: one or more end-state values and one or more end-state keys in the one or more second databases. The ML-based computing system 104 is further configured to update the one or more second databases by adjusting the one or more payments associated with the one or more first information based on mapping of the one or more first pairs associated with at least one of: the one or more second linkage values and the one or more linkage keys, with the one or more second pairs associated with at least one of: the one or more end-state values and the one or more end-state keys in the one or more second databases. The ML-based computing system 104 is further configured to provide an output of the updated one or more second databases with the adjusted one or more payments associated with the one or more first information to one or more first users on the user interface associated with the one or more electronic devices 102.

The ML-based computing system 104 may be hosted on a central server including at least one of: a cloud server or a remote server. In an embodiment, the ML-based computing system 104 may include at least one of: a user device, a server computer, a server computer over the network 106, a cloud-based computing system, a cloud-based computing system over the network 106, a distributed computing system, and the like. Further, the network 106 may be at least one of: a Wireless-Fidelity (Wi-Fi) connection, a hotspot connection, a Bluetooth connection, a local area network (LAN), a wide area network (WAN), any other wireless network, and the like. In an embodiment, the one or more electronic devices 102 may include at least one of: a laptop computer, a desktop computer, a tablet computer, a Smartphone, a wearable device, a Smart watch, and the like.

Further, the computing environment 100 includes the one or more first databases 108 communicatively coupled to the ML-based computing system 104 through the network 106. In an embodiment, the one or more first databases 108 include at least one of: one or more relational databases, one or more object-oriented databases, one or more data warehouses, one or more cloud-based databases, and the like. In another embodiment, a format of the one or more data extracted from the one or more first databases 108 may include at least one of: a comma-separated values (CSV) format, a JavaScript Object Notation (JSON) format, an Extensible Markup Language (XML), spreadsheets, and the like. Furthermore, the one or more electronic devices 102 include at least one of: a local browser, a mobile application, and the like.

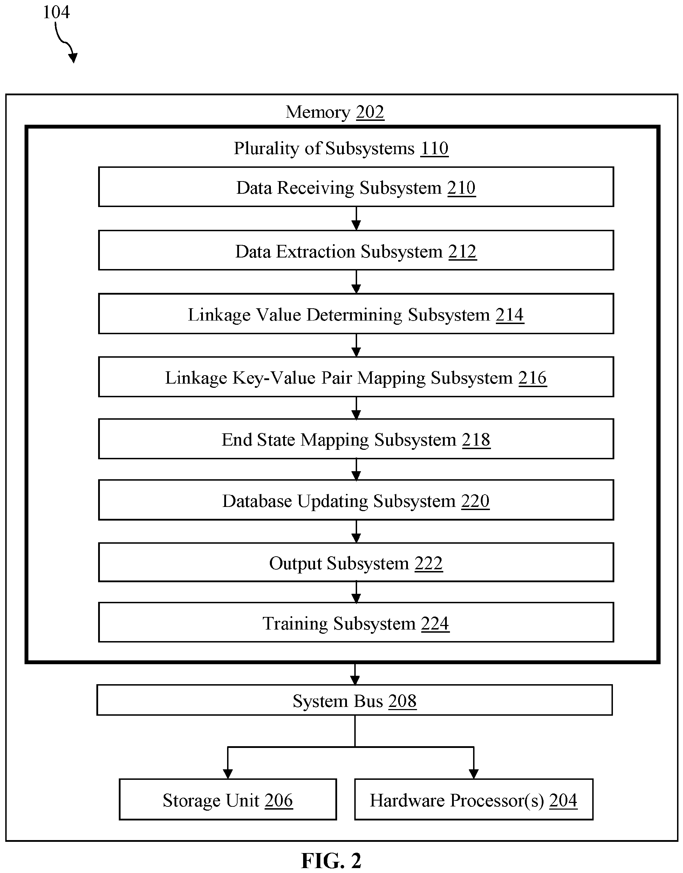

Furthermore, the one or more first users may use a web application through the local browser, the mobile application to communicate with the ML-based computing system 104. In an embodiment of the present disclosure, the ML-based computing system 104 includes a plurality of subsystems 110. Details on the plurality of subsystems 110 have been elaborated in subsequent paragraphs of the present description with reference to **FIG. 2****.**

**FIG. 2** is a detailed view of the ML-based computing system 104 for automatic data mapping for the one or more electronic documents, in accordance with another embodiment of the present disclosure. The ML-based computing system 104 includes a memory 202, one or more hardware processors 204, and a storage unit 206. The memory 202, the one or more hardware processors 204, and the storage unit 206 are communicatively coupled through a system bus 208 or any similar mechanism. The memory 202 includes the plurality of subsystems 110 in the form of programmable instructions executable by the one or more hardware processors 204.

The plurality of subsystems 110 includes a data receiving subsystem 210, a data extraction subsystem 212, a linkage value determining subsystem 214, a linkage key-value pair mapping subsystem 216, an end state mapping subsystem 218, a database updating subsystem 220, an output subsystem 222, and a training subsystem 224. The brief details of the plurality of subsystems 110 have been elaborated in a below table.

| **Plurality of Subsystems 110** | **Functionality** |
|---|---|
| Data receiving subsystem 210 | The data receiving subsystem 210 is configured to receive the one or more electronic documents from the one or more first databases 108. |
| Data extraction subsystem 212 | The data extraction subsystem 212 is configured to extract the one or more data including the one or more first information from the one or more electronic documents based on the optical character recognition (OCR) conversion process. |
| Linkage value determining subsystem 214 | The linkage value determining subsystem 214 is configured to determine the one or more first linkage values for the one or more first information associated with the one or more electronic documents by correlating each information of the one or more first information with the one or more metadata extracted from the one or more first information, based on the machine learning model. |
| Linkage key-value pair mapping subsystem 216 | The linkage key-value pair mapping subsystem 216 is configured to map the one or more second linkage values with the one or more linkage keys, in the one or more second databases. |
| End state mapping subsystem 218 | The end state mapping subsystem 218 is configured to map the one or more first pairs associated with at least one of: the one or more second linkage values and the one or more linkage keys, with the one or more second pairs associated with at least one of: the one or more end-state values and the one or more end-state keys in the one or more second databases. |
| Database updating subsystem 220 | The database updating subsystem 220 is configured to update the one or more second databases by adjusting the one or more payments associated with the one or more first information based on mapping of the one or more first pairs associated with at least one of: the one or more second linkage values and the one or more linkage keys, with the one or more second pairs associated with at least one of: the one or more end-state values and the one or more end-state keys in the one or more second databases. |
| Output Subsystem 222 | The output subsystem 222 is configured to provide the output of the updated one or more second databases with the adjusted one or more payments associated with the one or more first information to one or more first users on a user interface associated with one or more electronic devices 102. |
| Training subsystem 224 | The training subsystem 224 is configured to re-train the machine learning model over a plurality of time intervals with one or more training data. |

The one or more hardware processors 204, as used herein, means any type of computational circuit, including, but not limited to, at least one of: a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The one or more hardware processors 204 may also include embedded controllers, including at least one of: generic or programmable logic devices or arrays, application specific integrated circuits, single-chip computers, and the like.

The memory 202 may be non-transitory volatile memory and non-volatile memory. The memory 202 may be coupled for communication with the one or more hardware processors 204, being a computer-readable storage medium. The one or more hardware processors 204 may execute machine-readable instructions and/or source code stored in the memory 202. A variety of machine-readable instructions may be stored in and accessed from the memory 202. The memory 202 may include any suitable elements for storing data and machine-readable instructions, including at least one of: read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 202 includes the plurality of subsystems 110 stored in the form of machine-readable instructions on any of the above-mentioned storage media and may be in communication with and executed by the one or more hardware processors 204.

The storage unit 206 may be a cloud storage, a Structured Query Language (SQL) data store, a noSQL database or a location on a file system directly accessible by the plurality of subsystems 110.

The plurality of subsystems 110 includes the data receiving subsystem 210 that is communicatively connected to the one or more hardware processors 204. The data receiving subsystem 210 is configured to receive the one or more electronic documents (e.g., the one or more remittance documents) from the one or more first databases 108. The one or more electronic documents may include, but not limited to, the one or more scanned documents, the one or more scanned images, the one or more image files (e.g., the one or more Joint Photographic Experts Group (JPEG) files, the one or more Portable Network Graphics (PNG), the one or more Graphics Interchange Format files, and the like), the one or more Portable Document Format (PDF) files, the one or more text files (e.g., one or more Word files, the one or more Notepad files, and the like), the one or more spreadsheet files (e.g., one or more Excel files), and the like. In some embodiments, the one or more electronic documents may be received in the one or more electronic mails and scanned into the ML-based computing system 104. Alternatively, the one or more electronic documents may be received as the attachment to the one or more electronic mails. In some embodiments, the one or more electronic documents may include at least one of: the company invoice, the payment for the invoice, the invoice from the vendor, the receipt for the payment, the check from the customer, and the like.

In an embodiment, the one or more first databases 108 may include a range of databases and data sources from which the one or more electronic documents are retrieved. These databases include a local file system, one or more network shares, one or more cloud storage services, one or more file transfer protocol (FTP) servers, one or more document management systems, one or more content management systems, one or more electronic mail servers, one or more relational database systems, and the like. In another embodiment, the one or more first databases 108 may further extend its reach to one or more web services and one or more application programming interfaces (APIs), enabling the retrieval of documents from online data sources. Additionally, the data receiving subsystem 210 is configured to provide the capability to access documents obtained through document repositories, blockchain-based databases, legacy systems, and the like. In certain embodiments, the data receiving subsystem 210 is configured to offer integration with one or more external storage devices, one or more mobile devices, one or more cloud-based collaboration tools, one or more data warehouses, one or more custom data sources, one or more proprietary systems, and the like.

The plurality of subsystems 110 further includes the data extraction subsystem 212 that is communicatively connected to the one or more hardware processors 204. The data extraction subsystem 212 is configured to extract the one or more data including the one or more first information from the one or more electronic documents based on the optical character recognition (OCR) conversion process. The data extraction subsystem 212 is further configured to extract specific types of the one or more first information from the one or more electronic documents. The specific types of the one or more first information may be in form of least one of: one or more fields, one or more headers, one or more keywords, and one or more key numbers, within the one or more electronic documents. The specific types of the one or more first information may include one or more names (e.g., customer name, vendor name, company name, and the like), one or more labels or terms associated with invoices or transactions, one or more amount labels or terms, one or more payments or transaction types, one or more date labels or terms, one or more payment labels or terms, one or more account labels or terms, one or more account number labels or terms, one or more check labels or terms, and the like. For example, the data extraction subsystem 212 may recognize one or more terms like "amount billed," "payment amount," "invoice number," "customer number," "date," "discount," "from," and "to" as indicators of the specific types of the one or more first information within the one or more electronic documents.

In another embodiment, the data extraction subsystem 212 is configured to analyze a spatial layout of the one or more first information, based on at least one of: one or more positions, one or more patterns, and one or more locations, of the one or more first information within the one or more electronic documents. The one or more positions may include at least one of: top-left, top-right, top-center, middle-left, middle-right, middle, bottom-left, bottom-right, bottom-center, and the like. In an embodiment, this spatial analysis enhances the accuracy of extraction of the one or more first information.

In another embodiment, the data extraction subsystem 212 is further configured to extract the one or more metadata related to one or more coordinates associated with the one or more first information within the one or more electronic documents. The one or more metadata include one or more coordinate-level features including one or more precise coordinates of each word or number within the one or more electronic documents. The one or more metadata related to the one or more coordinates associated with the one or more first information include at least one of: one or more top coordinates of one or more pages, one or more bottom coordinates of the one or more pages, one or more left coordinates of the one or more pages, one or more right coordinates of the one or more pages, one or more rows on the one or more pages, one or more sections on the one or more pages, one or more characters present in the one or more pages, one or more top coordinates of the one or more first information, one or more bottom coordinates of one or more first information, one or more left coordinates of the one or more first information, one or more right coordinates of the one or more first information, one or more distances of the one or more first information from a left side of the one or more pages, one or more distances of the one or more first information from a top of the one or more pages, one or more row numbers of the one or more first information

The data extraction subsystem 212 may be configured to compute word areas to determine the spatial extent of individual words. Coordinate normalization techniques are employed to precisely pinpoint a location of each item of interest within the remittance document. This facilitates the accurate extraction of data from the remittance documents or documents including remittance information.

The plurality of subsystems 110 includes the linkage value determining subsystem 214 that is communicatively connected to the one or more hardware processors 204. The linkage value determining subsystem 214 is configured to determine the one or more first linkage values for the one or more first information associated with the one or more electronic documents by correlating each information of the one or more first information with one or more metadata extracted from the one or more first information, based on the machine learning model. The linkage value is a primary target variable from the one or more first information extracted by the data extraction subsystem 212. The linkage value determining subsystem 214 is configured to determine the linkage value (e.g., the one or more first linkage values) by categorizing and labelling each information of the one or more first information (e.g., textual information) in the one or more electronic document as either the one or more first linkage values or labels the one or more first information as one or more second information (e.g., irrelevant information).

The linkage value determining subsystem 214 is configured to utilize the machine learning model (e.g., a random forest based machine learning model). The random forest based machine learning model is configured to correlate each extracted textual information with the extracted one or more metadata for the textual information. Based on prior training, the random forest based machine learning model is configured to generate one or more confidence scores on whether each textual information is the linkage value or irrelevant.

For determining the one or more first linkage values for the one or more first information associated with the one or more electronic documents, the random forest based machine learning model is configured to generate the one or more confidence scores for each information of the one or more first information in the one or more electronic documents. The random forest based machine learning model is further configured to label the one or more first information to classify the one or more first information into at least one of: the one or more first linkage values and the one or more second information, based on the one or more confidence scores generated for each information of the one or more first information by one or more predetermined threshold values. In an embodiment, the one or more second information are distinct/irrelevant from the one or more first information.

The one or more first information are classified as the one or more second information (e.g., irrelevant information) when the one or more confidence scores for the one or more first information, are within the one or more predetermined threshold values. The one or more first information are classified as the one or more first linkage values when the one or more confidence scores for the one or more first information exceed the one or more predetermined threshold values. For example, for a particular textual information, if the confidence score for the one or more first linkage values is less than the predetermined threshold value (e.g., 50%), the textual information is marked/labelled as irrelevant. In another example, for a particular textual information, if the confidence score for the one or more first linkage values is greater than the predetermined threshold value (e.g., 50%), the textual information is marked/labelled as the linkage value.

In a non-limiting example, if an electronic document that includes various numbers, and one of the extracted numbers is: "INV123456." The random forest based machine learning model, after analyzing this invoice number and its associated metadata, assigns the one or more confidence scores of 80% to the extracted numbers. Since the confidence score is greater than the predetermined threshold value (e.g., 50%), this first information is labelled as a "linkage value." In another non-limiting example, in the same electronic document, there is another extracted invoice number: "987654." The random forest based machine learning model assigns the one or more confidence scores of 45% to this extracted invoice number. Since the confidence score is less than the predetermined threshold value (e.g., 50%), this first information is marked as "Irrelevant."

In yet another non-limiting example, in case, the electronic document includes several numbers, and three of them are analyzed by the random forest based machine learning model, such as "INV246813" having the confidence score of 70%, "135792" having the confidence score of 65%, and "AB567890" having the confidence score of 55%. As all three of these invoice numbers have confidence scores greater than 50%, the decision point (step 310) is triggered, and the process proceeds to the next step (step 314) to further handle/manage these determined one or more first linkage values.

In an embodiment, the linkage value determining subsystem 214 is configured to generate one or more data objects including the one or more confidence scores generated for each information of the one or more first information in the one or more electronic documents. The below table depicts the category of the one or more first information based on the one or more confidence scores generated for the one or more linkage values.

| **Linkage Value Confidence Score** | **Labelling in data object** |
|---|---|
| Less than 50% | Irrelevant |
| Greater than or equals 50% | Linkage Value |

In an embodiment, the linkage value determining subsystem 214 is further configured to generate a count of one or more first textual information (e.g., the one or more first information) in the one or more data objects with the linkage value confidence scores greater than 50%. In an embodiment, when a single first information with the one or more confidence scores exceeds the one or more predetermined threshold values, the one or more second linkage values are mapped with the one or more linkage keys in the one or more second databases. In another embodiment, when two or more first information with the one or more confidence scores exceed the one or more predetermined threshold values, the one or more second linkage values are mapped with the one or more linkage keys in the one or more second databases. In yet another embodiment, when there is no first information with the one or more confidence scores exceed the one or more predetermined threshold values, the data flow proceeds to a manual mapping process.

The plurality of subsystems 110 includes the linkage key-value pair mapping subsystem 216 that is communicatively connected to the one or more hardware processors 204. The linkage key-value pair mapping subsystem 216 is configured to determine whether the one or more first linkage values are matched with the one or more second linkage values in the one or more second databases, based on a fuzzy string matching technique. In other words, the linkage key-value pair mapping subsystem 216 is configured to search for appropriate values (e.g., the one or more second linkage values) in the one or more second databases (e.g., one or more accounts receivables databases) that matches the one or more first linkage values determined by the linkage value determining subsystem 214. The linkage key-value pair mapping subsystem 216 is further configured to generate a count of one or more instances the linkage values are recorded in the one or more second databases.

In an embodiment, the search for the one or more second linkage values in the one or more second databases includes a greedy search, which is trying to match/map each linkage value present in the one or more electronic documents with the one or more second databases using the fuzzy string matching technique. The fuzzy string matching technique is configured to manage conditions including at least one of: substring, prefix, suffix OCR mis-capture, and the like.

The linkage key-value pair mapping subsystem 216 is further configured to determine the one or more linkage keys by analyzing the one or more columns in the one or more second databases where the one or more first linkage values are matched with the one or more second linkage values. In other words, the matched/mapped linkage values are labelled as linkage value and the accounts receivables column in the one or more second databases where the match is found is labelled as linkage key.

In certain embodiments, since the linkage value is a uniquely shared identifier present in both the one or more second databases (e.g., open accounts receivables database) and the one or more electronic documents (e.g., the one or more remittance documents). In such instances, a key associated with the linkage value is labelled as the linkage key. The linkage key and linkage value pair is updated in the one or more data object and the dataflow proceeds to the end-state mapping subsystem 218. In an embodiment, the linkage key-value pair mapping subsystem 216 has a decision step.

In an embodiment, when a single linkage key is determined in the one or more second databases, the one or more pairs of the single linkage key and the one or more linkage values including the one or more confidence scores are mapped with the one or more second pairs associated with at least one of: the one or more end-state values and the one or more end-state keys in the one or more second databases. In other words, if a single linkage key is determined in the one or more second databases, the data flow proceeds to end-state mapping subsystem 218.

In another embodiment, when two or more linkage keys are determined in the one or more second databases, the one or more pairs of a linkage key and a corresponding linkage value including one or more optimum confidence scores are mapped with the one or more second pairs associated with at least one of: the one or more end-state values and the one or more end-state keys in the one or more second databases. In other words, if multiple linkage keys are determined in the one or more second databases, the data flow proceeds to end-state mapping subsystem 218. In another embodiment, when there is no linkage key in the one or more data objects, the data flow proceeds to the manual mapping process.

The plurality of subsystems 110 includes the end state mapping subsystem 218 that is communicatively connected to the one or more hardware processors 204. The end state mapping subsystem 218 is configured to map the one or more first pairs associated with at least one of: the one or more second linkage values and the one or more linkage keys, with the one or more second pairs associated with at least one of: the one or more end-state values and the one or more end-state keys in the one or more second databases. The end-state mapping is a process used in accounts receivables management and payment reconciliation to ensure that the one or more payments are properly matched and closed. The end-state mapping process involves using specific key-value pairs to determine and update records in the one or more second databases (e.g., the accounts receivables database).

In one embodiment, the end state key is a specific key or identifier used in the accounts receivables database. The end state key is typically associated with a customer or payment. For example, the end state keys include at least one of: one or more invoice numbers, one or more document numbers, any other unique identifiers that help pinpoint a specific transaction, and the like. In an embodiment, an end state value is a final value that is needed from the accounts receivables database to close a payment. It's the value that confirms that the payment is successfully matching and completed. In an embodiment, the linkage value is a shared identifier present in both open accounts receivable (AR) records and the remittance documents, serving as a connecting element to link specific accounts receivable (AR) items with their corresponding payment documentation.

In another embodiment, the linkage key is an accounts receivables database field or column containing the linkage value, which may be either a single key or a list of linkage keys for a particular customer or transaction, facilitating the accurate association of payments with relevant accounts receivables entries. In certain embodiments, the end-state keys are defined for a particular customer by the one or more first users. As an example, the linkage value may be the one or more invoice numbers, one or more purchase order numbers, and the like. In one embodiment, to map the one or more first pairs associated with at least one of: the one or more second linkage values and the one or more linkage keys, with the one or more second pairs associated with at least one of: one or more end-state values and one or more end-state keys in the one or more second databases, the end state mapping subsystem 218 is configured to determine whether the one or more first pairs associated with at least one of: the one or more second linkage values and the one or more linkage keys determined by the linkage key-value pair mapping subsystem 216, matches the one or more second pairs associated with at least one of: one or more end-state values and one or more end-state keys in the one or more second databases.

In an embodiment, if there is a direct match, the database updating subsystem 220 can proceed to update the one or more second databases by adjusting one or more payments associated with the one or more first information and close the one or more payments. In an embodiment, the plurality of subsystems 110 further includes the database updating subsystem 220 that is communicatively connected to the one or more hardware processors 204.

In another embodiment, if the one or more first pairs associated with at least one of: the one or more second linkage values and the one or more linkage keys, are not mapped with the one or more second pairs associated with at least one of: one or more end-state values and one or more end-state keys in the one or more second databases, the end-state mapping subsystem 218 is configured to search for the appropriate value in an accounts receivables entry that matches the linkage value. This typically involves looking for a related entry based on the provided information, including at least one of: one or more customer details, one or more transaction details, and the like. Once the linkage value is matched with an entry in the second database, the end-state mapping subsystem 218 is configured to retrieve the one or more second pairs associated with at least one of: one or more end-state values and one or more end-state keys, associated with that specific entry. This retrieved end-state key-value pair is used to update the one or more second databases by the database updating subsystem 220. With the correct end-state key-value pair, the database updating subsystem 220 is configured to update the one or more second databases (e.g., the accounts receivables database). The update is configured to signify the successful matching and closing of the one or more payments, indicating that the transaction has been properly accounted for.

The plurality of subsystems 110 includes a manual mapping subsystem that is communicatively connected to the one or more hardware processors 204. The manual mapping subsystem is configured to address and manage discrepancies or anomalies that may arise during the functioning of the linkage value determining subsystem 214, the linkage key-value pair mapping subsystem 216 and the end-state mapping subsystem 218. These discrepancies may include scenarios where multiple linkage values or no linkage value are associated with a single document or scenarios wherein the ML-based computing system 104 is unable to determine the linkage value.

In another embodiment, the manual mapping subsystem is configured to manage situations where the end state mapping subsystem 218 (e.g., an integral component of the ML-based computing system 104) encounters difficulties in mapping the linkage key-value to the appropriate end-state key-value pair. This situation may occur due to one or more factors including inconsistencies within the one or more second databases (e.g., the accounts receivables databases). In yet another embodiment, the manual mapping subsystem is configured to detect and flag the one or more electronic documents that exhibit the aforementioned discrepancies. When such discrepancies are identified, the ML-based computing system 104 marks the one or more electronic documents for manual review and resolution. This flagging mechanism ensures that the one or more first users (e.g., a human analyst) can intervene to rectify the discrepancies and ensure accurate reconciliation.

In a further embodiment, the manual mapping subsystem is configured to enable seamless integration of human intervention within an automated reconciliation process. The manual mapping subsystem is further configured to allow the one or more first users to review and resolve discrepancies promptly, thereby enhancing overall accuracy and reliability of a financial reconciliation system. In another embodiment, the manual mapping subsystem is further configured to provide a user-friendly interface through which the one or more first users can access and address the one or more electronic documents marked for manual review. In optional embodiments, the manual mapping subsystem is configured to generate detailed logs and reports regarding documents that have been flagged for manual review. These logs serve as a record of actions taken during the resolution process, providing transparency and traceability within the financial reconciliation system.

The plurality of subsystems 110 includes the output subsystem 222 that is communicatively connected to the one or more hardware processors 204. The output subsystem 222 is configured to provide the output of mapped linkage value to the accounts receivables entry to the one or more first users on the user interface associated with the one or more electronic devices 102. In other words, the output subsystem 222 is configured to provide the output of the updated one or more second databases by adjusting the one or more payments associated with the one or more first information to the one or more first users on the user interface associated with the one or more electronic devices 102.

The plurality of subsystems 110 includes the training subsystem 224 that is communicatively connected to the one or more hardware processors 204. The training subsystem 224 is configured to train the machine learning model (e.g., the random forest based machine learning model). For training the machine learning model, the training subsystem 224 is configured to obtain one or more labelled datasets from the one or more first databases 108. The one or more labelled datasets include the one or more first information extracted from the one or more electronic documents. The training subsystem 224 is further configured to select one or more features vectors associated with at least one of: the one or more first information extracted from the one or more electronic documents and the metadata extracted from the one or more first information. In an embodiment, the machine learning model may be the random forest based machine learning model.

The training subsystem 224 is further configured to label the one or more first information to classify the one or more first information into at least one of: the one or more first linkage values and the one or more second information, based on one or more pre-configured rules and parameters. The training subsystem 224 is further configured to segment/divide the one or more labelled datasets into at least one of: one or more training datasets and one or more validation datasets. The training subsystem 224 is further configured to train the machine learning model to correlate the one or more feature vectors associated with at least one of: the one or more first information and the metadata, with the one or more first linkage values, based on one or more hyperparameters.

The one or more hyperparameters comprise at least one of: max_depth, class_weight, n_estimators, criterion, min_samples_split, max_features, min_samples_leaf, bootstrap, and the like. The max_depth hyperparameter is configured to control an optimum depth of each decision tree in the random forest based machine learning model. The class_weighthyperparameter is configured to adjust one or more weights of one or more classes in the random forest based machine learning model to control one or more class imbalance errors/issues. The n_estimators hyperparameter is configured to indicate a number of one or more decision trees to be included in the random forest based machine learning model.

The criterion hyperparameter is configured to determine quality of a split when the one or more decision trees are generated within the random forest based machine learning model. The min samples _split hyperparameter is configured to set a pre-determined number of one or more data points required in a node before the one or more data points split during a tree-building process. The max_features hyperparameter is configured to determine an optimum number of features when the optimum split at each node in the random forest based machine learning model. The min _samples_leaf hyperparameter is configured to indicate the pre-determined number of one or more data points required to generate a leaf node during the tree-building process. The bootstrap hyperparameter is configured to control whether the one or more data points are sampled when one or more individual decision trees are generated in the random forest based machine learning model.

The training subsystem 224 is further configured to generate the one or more confidence scores for the one or more first linkage values, based on the trained machine learning model. The training subsystem 224 is further configured to validate the machine learning model based on one or more validation datasets. For validating the machine learning model, the training subsystem 224 is configured to determine whether one or more metric scores attained by the trained machine learning model, exceeds one or more pre-determined threshold values. In an embodiment, the one or more metric scores are associated with one or more validation metrics including at least one of: precision metric, recall metric, F1-score metric, and confusion metric.

In an embodiment, the training subsystem 224 is further configured to re-train the machine learning model over the plurality of time intervals based on the one or more training data. For re-training the machine learning model over the plurality of time intervals, the training subsystem 224 is configured to receive the one or more training data associated with at least one of: the one or more first information extracted from the one or more electronic documents and the metadata extracted from the one or more first information. The training subsystem 224 is further configured to add the one or more training data with the one or more training datasets to generate one or more updated training datasets that includes old and new data points.

The training subsystem 224 is further configured to re-train the machine learning model to correlate the one or more feature vectors associated with at least one of: the one or more first information and the metadata, with the one or more first linkage values. In an embodiment, the one or more confidence scores are generated based on re-training the machine learning model. The training subsystem 224 is further configured to execute the re-trained machine learning model in the linkage value determining subsystem 214 to determine the one or more first linkage values for the one or more first information associated with the one or more electronic documents.

Subsequently, the same training process is followed which includes continuous evaluation and tuning to assess the quality of the mappings and iteratively improving the results if necessary. The steps are repeated for a fixed number of iterations until the ML-based computing system 104 can identify and map the one or more first linkage values with accounts receivables data with sufficient accuracy. Thereafter, the changes are implemented to the linkage value determining subsystem 214, and new mappings take place with an updated module/subsystem.

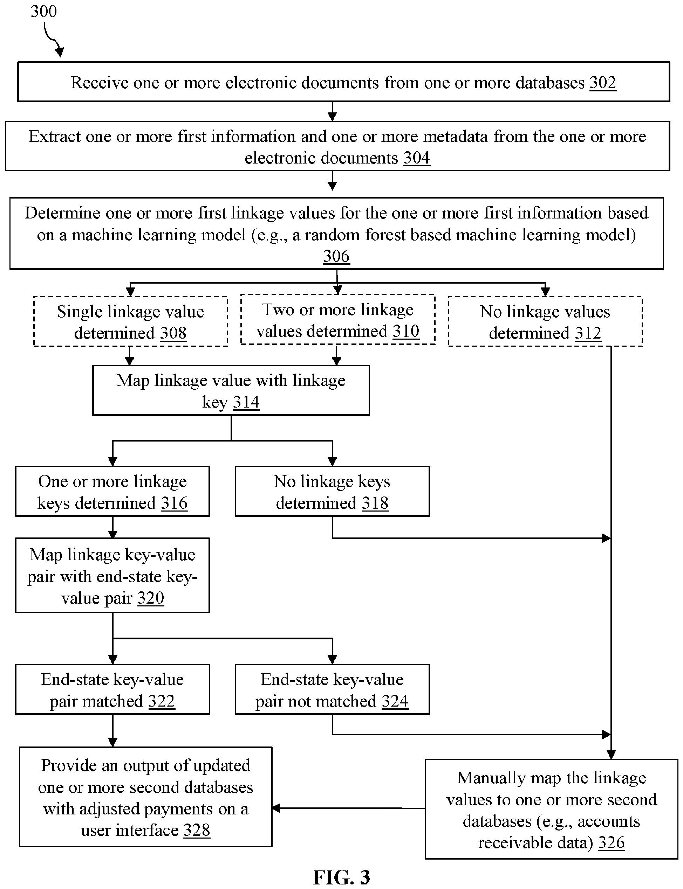

**FIG. 3** is an overall process flow 300 of automatic data mapping for the one or more electronic documents, in accordance with another embodiment of the present disclosure. At step 302, the one or more electronic documents are received from the one or more first databases 108. At step 304, the one or more data including the one or more first information are extracted from the one or more electronic documents based on the optical character recognition (OCR) conversion process.

At step 306, the one or more first linkage values are determined for the one or more first information associated with the one or more electronic documents by correlating each information of the one or more first information with the one or more metadata extracted from the one or more first information, based on the machine learning model. When the single first information with the one or more confidence scores exceeds the one or more predetermined threshold values, as shown in step 308, the one or more second linkage values are mapped with the one or more linkage keys in the one or more second databases, as shown in step 314. When the two or more first information with the one or more confidence scores exceed the one or more predetermined threshold values, as shown in step 310, the one or more second linkage values are mapped with the one or more linkage keys in the one or more second databases, as shown in step 314. When there is no first information, as shown in step 312, in the one or more data objects with the linkage value confidence score greater than 50%, the data flow proceeds to the manual mapping process, as shown in step 326.

At step 314, the one or more second linkage values are mapped with the one or more linkage keys. In an embodiment, there should be a single count of one or more linkage keys in the one or more second databases (e.g., the accounts receivable databases). When the one or more linkage keys are determined in the one or more second databases, as shown in step 316, the one or more pairs of the single linkage key and the one or more linkage values including the one or more confidence scores are mapped with the one or more second pairs associated with at least one of: the one or more end-state values and the one or more end-state keys in the one or more second databases, as shown in step 320.

In an embodiment, if the one or more second pairs associated with at least one of: the one or more end-state values and the one or more end-state keys in the one or more second databases are not matched, the linkage key corresponding to the second-highest linkage value confidence score is used for end state mapping, as shown in step 320. The loop is continued until the one or more second pairs associated with at least one of: the one or more end-state values and the one or more end-state keys in the one or more second databases are matched (as shown in step 322) or the matching fails (as shown in step 324). If there is no linkage key (as shown in step 318) in the one or more data objects, the data flow proceeds to the manual mapping process, as shown in step 326.

In a non-limiting example, for a linkage value "INV123456" having a confidence score of 85%, a single linkage is found as "Invoice Number". Since a single linkage key ("Invoice Number") is found, the method proceeds to end-state key-value pair mapping (step 320). In another non-limiting example, for a linkage value "INV156434" having a confidence score of 65%, and no linkage key is found. Since no linkage key is found, the method proceeds to the manual mapping process (step 326).

In yet another non-limiting example, one or more linkage values with confidence score greater than 50% is detected, such as "INV987654" having a confidence score of 75%, "INV543210" having a confidence score of 60%, and "INV999999" having a confidence score of 90%. The linkage keys found in the one or more databases against these linkage values is "Invoice Number". The method selects the linkage key with the highest confidence score ("Invoice Number: INV999999") for end-state key-value pair mapping (step 320), which is successfully mapped/matched.

In yet another non-limiting example, one or more linkage values with confidence scores greater than 50% is detected, such as "INV111111" having a confidence score of 70%, "INV222222" having a confidence score of 85%, and "INV333333" having a confidence score of 60%. Initially, the method selects the linkage key with the highest confidence score ("Invoice Number: INV222222") for the end-state key-value pair mapping (step 320). If the mapping fails, the method will try the next highest confidence score ("Invoice Number: INV111111") until a successful mapping (step 322) or a failure (step 324) occurs. If there is a failure step, the method proceeds to the manual mapping process (step 326).

At step 320, the one or more first pairs associated with at least one of: the one or more second linkage values and the one or more linkage keys, are mapped with the one or more second pairs associated with at least one of: the one or more end-state values and the one or more end-state keys in the one or more second databases, when the one or more linkage keys are determined in the one or more second databases, as shown in step 316. The one or more second databases are updated by adjusting the one or more payments associated with the one or more first information based on mapping of the one or more first pairs associated with at least one of: the one or more second linkage values and the one or more linkage keys, with the one or more second pairs associated with at least one of: the one or more end-state values and the one or more end-state keys in the one or more second databases, as shown in step 322.

When the one or more first pairs associated with at least one of: the one or more second linkage values and the one or more linkage keys, are not mapped with the one or more second pairs associated with at least one of: the one or more end-state values and the one or more end-state keys in the one or more second databases, then the data flow proceeds to the manual mapping process, as shown in step 326. At step 328, the output of the updated one or more second databases with the adjusted one or more payments associated with the one or more first information to one or more first users on the user interface associated with the one or more electronic devices 102.

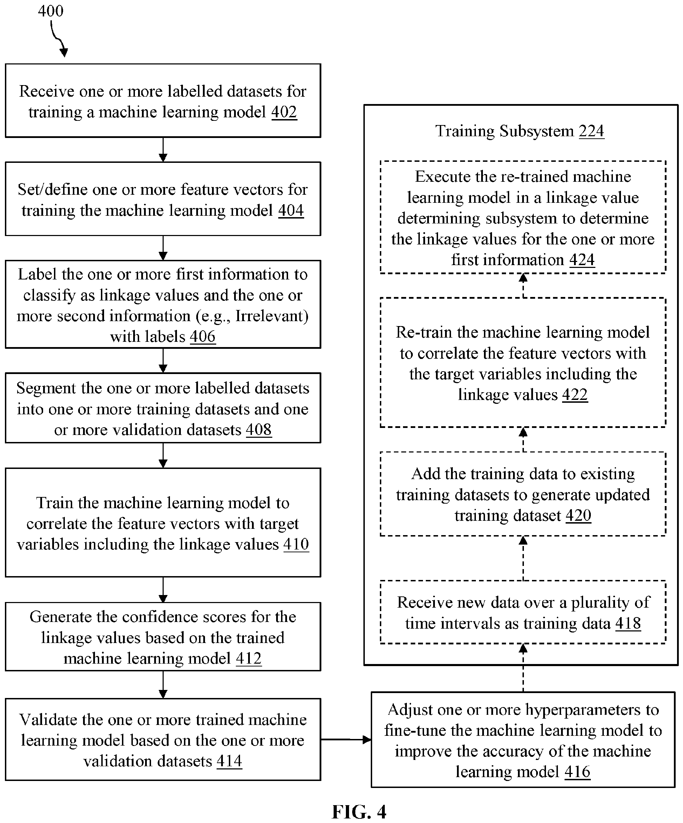

**FIG. 4** is a process flow 400 of training a random forest based machine learning model for automatic data mapping for the one or more electronic documents, in accordance with an embodiment of the present disclosure. At step 402, the one or more labelled datasets with a diverse set of the one or more electronic documents, are received. In an embodiment, the one or more labelled datasets include the one or more first information extracted from the one or more electronic documents. In an embodiment, the step 402 may involve extensive data procedure to eliminate duplicates, errors, and irrelevant documents.

At step 404, the one or more features vectors associated with at least one of: the one or more first information extracted from the one or more electronic documents and the metadata extracted from the one or more first information, are selected to train the machine learning model. In an embodiment, the machine learning model is the random forest based machine learning model. At step 406, the one or more first information are labelled to classify the one or more first information into at least one of: the one or more first linkage values and the one or more second information (e.g., the irrelevant information), based on one or more pre-configured rules and parameters.

At step 408, the one or more labelled datasets are segmented/split into at least one of: the one or more training datasets and the one or more validation datasets. In a non-limiting embodiment, a 70/30 split is used for the one or more training datasets and the one or more validation datasets, respectively. In another non-limiting embodiment, a 80/20 split is used for the one or more training datasets and the one or more validation datasets, respectively.

At step 410, the machine learning model is trained to correlate the one or more feature vectors associated with at least one of: the one or more first information and the metadata, with the one or more first linkage values, based on the one or more hyperparameters. In an embodiment, the one or more hyperparameters include at least one of: the max_depth, the class_weight, the n_estimators, the criterion, the min_samples_split, the max_features, the min_samples_leaf, and the bootstrap. At step 412, the one or more confidence scores are generated for the one or more first linkage values, based on the trained machine learning model.

At step 414, the machine learning model is validated based on the one or more validation datasets. In an embodiment, the machine learning model is validated by determining whether the one or more metric scores attained by the trained machine learning model, exceeds the one or more pre-determined threshold values. In an embodiment, the one or more metric scores are associated with one or more validation metrics including at least one of: the precision metric, the recall metric, the F1-score metric, confusion metric, and the like. At step 416, the one or more hyperparameters are adjusted to fine-tune the machine learning model based on one or more results of validation of the machine learning model.

At step 418, the one or more training data associated with at least one of: the one or more first information extracted from the one or more electronic documents and the metadata extracted from the one or more first information, are received. At step 420, the one or more training data are added with the one or more training datasets to generate the one or more updated training datasets. At step 422, the machine learning model is re-trained to correlate the one or more feature vectors associated with at least one of: the one or more first information and the metadata, with the one or more first linkage values. In an embodiment, the one or more confidence scores are generated based on re-training of the machine learning model. At step 424, the re-trained machine learning model is executed in the linkage value determining subsystem 214 to determine the one or more first linkage values for the one or more first information associated with the one or more electronic documents.

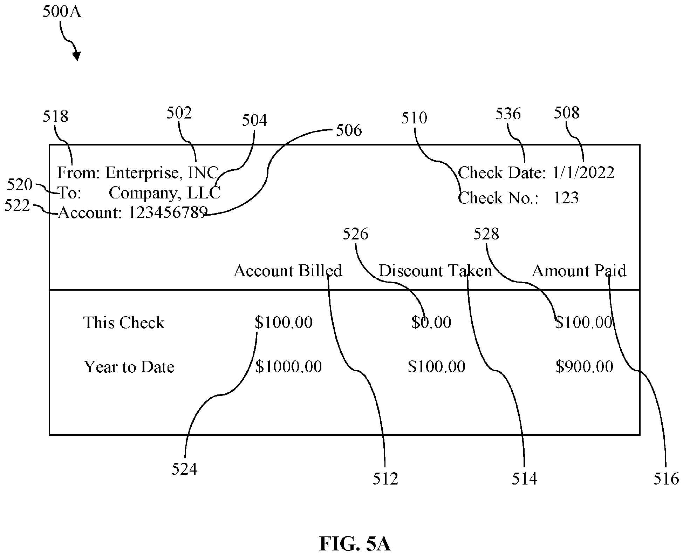

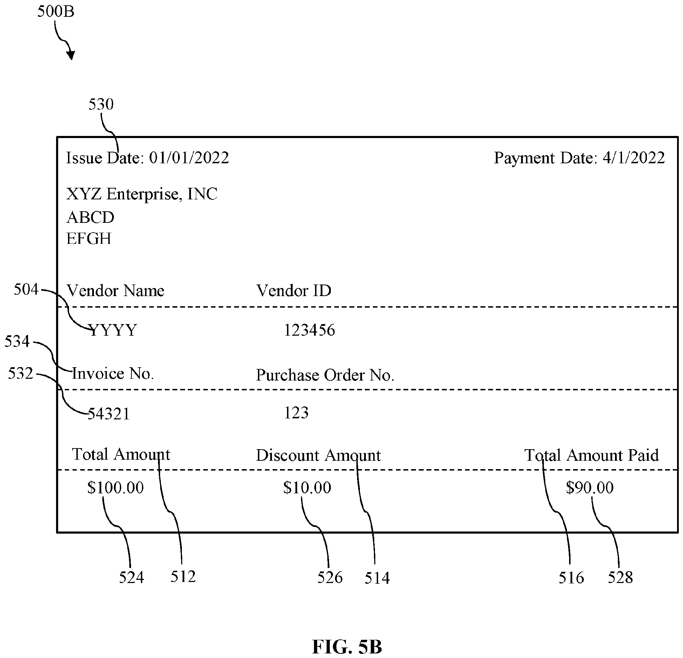

**FIGS. 5A** and **5B** are exemplary electronic documents (500A, 500B) depicting to train the machine learning model, to extract the one or more first information (e.g., one or more remittance information), and to map the one or more first information, in accordance with an embodiment of the present disclosure. The electronic documents (e.g., the remittance documents) 500A and 500B may be the one or more first electronic documents described in **FIG. 2** and/or the one or more historical electronic documents described in **FIG. 2****.** The remittance documents may include a company invoice, a payment for an invoice, an invoice from a vendor, a receipt for a payment, a check from a customer, and the like.

The remittance documents 500A and 500B may include, but not limited to, at least one of: a customer 502, a vendor 504, an invoice number 532, an invoice amount 524, an invoice date 530, a payment 528, a payment date 508, a discount 526, a credit number, a debit number, a check number 510, or an account number 506, and/or the like. The remittance documents 500A and 500B are not limited to containing only the remittance information (e.g., the first information) listed above and may contain additional remittance information.

In some cases, the remittance documents 500A and 500B may further include the one or more fields, the one or more headers, the one or more key words, and the one or more key numbers. The one or more fields, the one or more headers, the one or more key words, and the one or more key numbers may include, but not limited to, at least one of: "amount billed" 512 identifying the amount billed for an invoice or a transaction, "payment amount" 516 identifying an amount paid, "invoice number" 534 identifying an invoice number, "customer number" 522 identifying a customer number or customer account number, "date" 536 identifying a date, "discount" 514 identifying an amount or a percentage of a discount, "from" 518 identifying a source of the remittance information, "to" 520 identifying a recipient of the remittance information, and the like. The remittance documents 500A and 500B are not limited to containing only the one or more fields, the one or more headers, the one or more key words, and the one or more key numbers listed above and may include additional one or more fields, one or more headers, one or more key words, and one or more key numbers.

The ML-based computing system 104 and a ML-based computing method might use these example remittance documents 500A and 500B to train one or more machine learning models, to map the remittance information, to extract the remittance information, and the like.

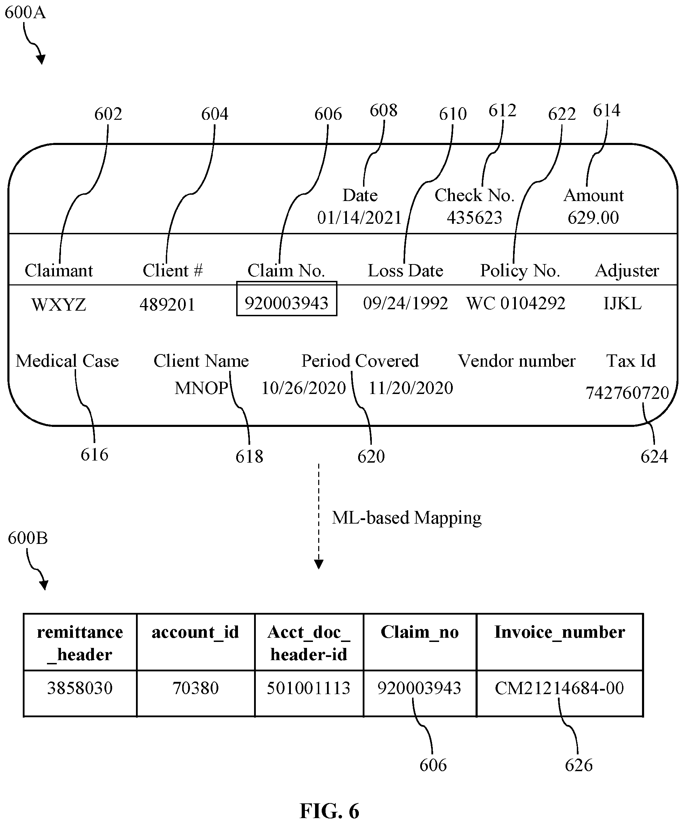

**FIG. 6** is an exemplary representation (600A, 600B) depicting the automatic data mapping for the one or more electronic documents to update one or more second databases (e.g., the accounts receivables database records), in accordance with an embodiment of the present disclosure. **FIG. 6** depicts the remittance document 600A that includes the one or more first information such as "Claimant Name" 602, "Client No." 604, "Claim No." 606, "Date" 608 and 610, "Check No" 612 and "Amount Paid" 614, "Medical Case" 616, "Client Name" 618, "Period Covered" 620, "Policy Number" 622, "Tax-id" 624, and the like.

In this example, the ML-based computing system 104 is configured to first search and extract textual information and metadata from the remittance document 600A. Then, the ML-based computing system 104 is configured to identify each textual information as either linkage value or irrelevant based on the one or more confidence scores generated by the random forest based machine learning model. Based on prior training, the ML-based computing system 104 is configured to generate the one or more confidence scores for the linkage value greater than 50% for element 606 which is for the number "920003943" using the linkage value determining subsystem 214.

In the next step, the linkage key-value pair mapping subsystem 216 is configured to search for the appropriate value (e.g., the second linkage value) in the accounts receivables database (e.g., the second database) that matches the first linkage value, and is configured to generate a count of the number of instances the second linkage value recorded in the accounts receivables database. In this example, the information "920003943" can be found in a Column for Claim_No 606 in the entry 600B in the accounts receivables database and the count generated is one. In the next step, the end state mapping subsystem 218 is configured to check that "Invoice_number" 626 is the end-state key-value pair for closing the payment. So, the end state mapping subsystem 218 is configured to utilize the value against the "Invoice_number" 626 which is "CM21214684-00" for recording the payment against the invoice. The end-state key is pre-defined or pre-determined for a particular entity in one or more databases.

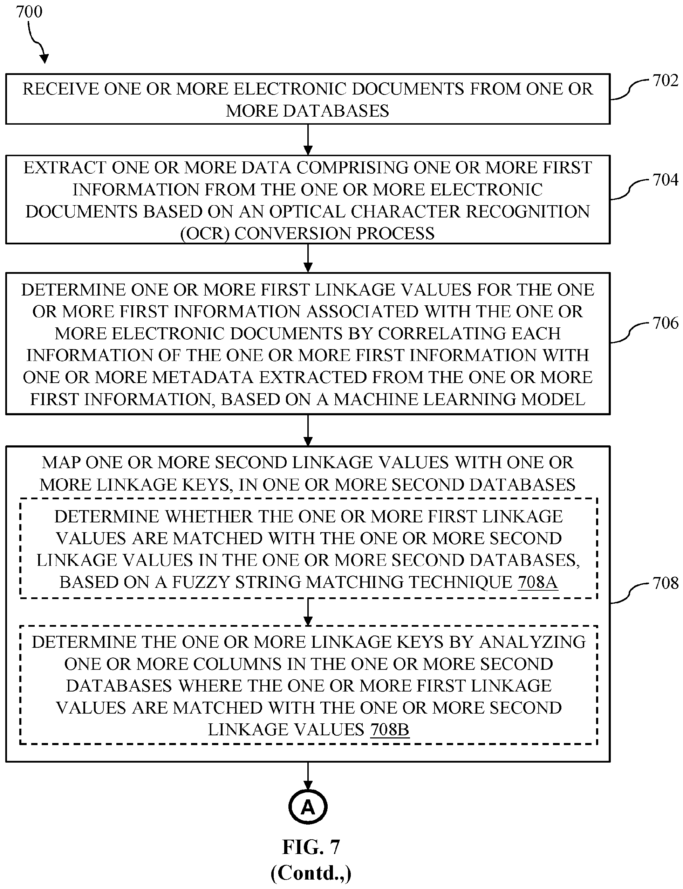

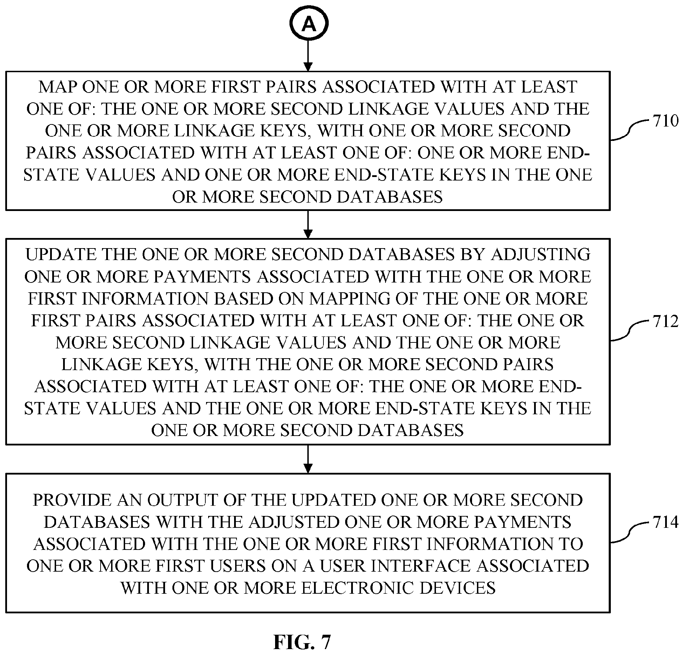

**FIG. 7** is a flow chart illustrating the machine-learning based (ML-based) computing method 700 for automatic data mapping for the one or more electronic documents, in accordance with an embodiment of the present disclosure. At step 702, the one or more electronic documents from the one or more first databases 108.

At step 704, the one or more data including the one or more first information are extracted from the one or more electronic documents based on the optical character recognition (OCR) conversion process.

At step 706, the one or more first linkage values are determined for the one or more first information associated with the one or more electronic documents by correlating each information of the one or more first information with the one or more metadata extracted from the one or more first information, based on the machine learning model.

At step 708, the one or more second linkage values are mapped with the one or more linkage keys, in the one or more second databases by: (a) determining whether the one or more first linkage values are matched with the one or more second linkage values in the one or more second databases, based on the fuzzy string matching technique, as shown in step 708A, and (b) determining the one or more linkage keys by analyzing the one or more columns in the one or more second databases where the one or more first linkage values are matched with the one or more second linkage values, as shown in step 708B.

At step 710, the one or more first pairs associated with at least one of: the one or more second linkage values and the one or more linkage keys, are mapped with the one or more second pairs associated with at least one of: the one or more end-state values and the one or more end-state keys in the one or more second databases.

At step 712, the one or more second databases are updated by adjusting one or more payments associated with the one or more first information based on mapping of the one or more first pairs associated with at least one of: the one or more second linkage values and the one or more linkage keys, with the one or more second pairs associated with at least one of: the one or more end-state values and the one or more end-state keys in the one or more second databases.

At step 714, the output of the updated one or more second databases with the adjusted one or more payments associated with the one or more first information, is provided to the one or more first users on the user interface associated with the one or more electronic devices 102. In **FIG. 7****,** the circular symbol with "A" written inside is being used as an off-page connector. This is used for indicating that **FIG. 7** continues in the next page.

The present invention has the following advantages. The present invention with the ML-based computing system 104 is configured to provide the result of mapped linkage value to the accounts receivables entry to the one or more first users. The present invention with the ML-based computing system 104 is configured to minimize the human intervention in updating the one or more second databases by adjusting the one or more payments in an automated manner.

Further, the present invention is configured to utilize automation and the integration of the machine learning models to streamline and enhance the efficiency and accuracy of payment processing or cash application processes in accounts receivables.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer-readable medium can be any apparatus that can comprise, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid-state memory, magnetic tape, a removable computer diskette, a random-access memory (RAM), a read-only memory (ROM), a rigid magnetic disk and an optical disk. Current examples of optical disks include compact disk-read only memory (CD-ROM), compact disk-read/write (CD-R/W) and DVD.

Input/output (I/O) devices (including but not limited to keyboards, displays, pointing devices, etc.) can be coupled to the ML-based computing system 104 either directly or through intervening I/O controllers. Network adapters may also be coupled to the ML-based computing system 104 to enable the data processing system to become coupled to other data processing systems or remote printers or storage devices through intervening private or public networks. Modems, cable modem and Ethernet cards are just a few of the currently available types of network adapters.

A representative hardware environment for practicing the embodiments may include a hardware configuration of an information handling/ML-based computing system 104 in accordance with the embodiments herein. The ML-based computing system 104 herein comprises at least one processor or central processing unit (CPU). The CPUs are interconnected via the system bus 208 to various devices including at least one of: a random-access memory (RAM), read-only memory (ROM), and an input/output (I/O) adapter. The I/O adapter can connect to peripheral devices, including at least one of: disk units and tape drives, or other program storage devices that are readable by the ML-based computing system 104. The ML-based computing system 104 can read the inventive instructions on the program storage devices and follow these instructions to execute the methodology of the embodiments herein.

The ML-based computing system 104 further includes a user interface adapter that connects a keyboard, mouse, speaker, microphone, and/or other user interface devices including a touch screen device (not shown) to the bus to gather user input. Additionally, a communication adapter connects the bus to a data processing network, and a display adapter connects the bus to a display device which may be embodied as an output device including at least one of: a monitor, printer, or transmitter, for example.

A description of an embodiment with several components in communication with each other does not imply that all such components are required. On the contrary, a variety of optional components are described to illustrate the wide variety of possible embodiments of the invention. When a single device or article is described herein, it will be apparent that more than one device/article (whether or not they cooperate) may be used in place of a single device/article. Similarly, where more than one device or article is described herein (whether or not they cooperate), it will be apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open-ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that are issued on an application based here on. Accordingly, the embodiments of the present invention are intended to be illustrative, but not limiting, of the scope of the invention, which is set forth in the following claims.

## Claims

1. A machine-learning based (ML-based) computing method for automatic data mapping for one or more electronic documents, the ML-based computing method comprising:
receiving, by one or more hardware processors, one or more electronic documents from one or more first databases;
extracting, by the one or more hardware processors, one or more data comprising one or more first information from the one or more electronic documents based on an optical character recognition (OCR) conversion process;
determining, by the one or more hardware processors, one or more first linkage values for the one or more first information associated with the one or more electronic documents by correlating each information of the one or more first information with one or more metadata extracted from the one or more first information, based on a machine learning model;
mapping, by the one or more hardware processors, one or more second linkage values with one or more linkage keys, in one or more second databases by:
determining, by the one or more hardware processors, whether the one or more first linkage values are matched with the one or more second linkage values in the one or more second databases, based on a fuzzy string matching technique;
determining, by the one or more hardware processors, the one or more linkage keys by analyzing one or more columns in the one or more second databases where the one or more first linkage values are matched with the one or more second linkage values; and
mapping, by the one or more hardware processors, the one or more second linkage values with the one or more linkage keys;
mapping, by the one or more hardware processors, one or more first pairs associated with at least one of: the one or more second linkage values and the one or more linkage keys, with one or more second pairs associated with at least one of: one or more end-state values and one or more end-state keys in the one or more second databases;
updating, by the one or more hardware processors, the one or more second databases by adjusting one or more payments associated with the one or more first information based on mapping of the one or more first pairs associated with at least one of: the one or more second linkage values and the one or more linkage keys, with the one or more second pairs associated with at least one of: the one or more end-state values and the one or more end-state keys in the one or more second databases; and
providing, by the one or more hardware processors, an output of the updated one or more second databases with the adjusted one or more payments associated with the one or more first information to one or more first users on a user interface associated with one or more electronic devices.

2. The machine-learning based (ML-based) computing method of claim 1, wherein extracting the one or more data comprising the one or more first information associated with the one or more electronic documents, comprises:
extracting, by the one or more hardware processors, the one or more first information in form of at least one of: one or more fields, one or more headers, one or more keywords, and one or more key numbers, within the one or more electronic documents by analyzing a spatial layout of the one or more first information, based on at least one of: one or more positions, one or more patterns, and one or more locations, of the one or more first information within the one or more electronic documents; and
extracting, by the one or more hardware processors, the one or more metadata related to one or more coordinates associated with the one or more first information within the one or more electronic documents, wherein:
the one or more first information comprise at least one of: one or more second users associated with the one or more electronic documents, one or more vendors linked to the one or more electronic documents, one or more invoice numbers, one or more invoice amounts corresponding to the one or more invoice numbers, one or more invoice dates, one or more payment details, one or more payment dates, one or more credit and one or more debit numbers, one or more check numbers, and one or more account numbers associated with the one or more electronic documents; and
the one or more metadata related to the one or more coordinates associated with the one or more first information comprise at least one of: one or more top coordinates of one or more pages, one or more bottom coordinates of the one or more pages, one or more left coordinates of the one or more pages, one or more right coordinates of the one or more pages, one or more rows on the one or more pages, one or more sections on the one or more pages, one or more characters present in the one or more pages, one or more top coordinates of the one or more first information, one or more bottom coordinates of one or more first information, one or more left coordinates of the one or more first information, one or more right coordinates of the one or more first information, one or more distances of the one or more first information from a left side of the one or more pages, one or more distances of the one or more first information from a top of the one or more pages, one or more row numbers of the one or more first information.

3. The machine-learning based (ML-based) computing method of claim 1, wherein determining, by the machine learning model, the one or more first linkage values for the one or more first information associated with the one or more electronic documents, comprises:
generating, by the one or more hardware processors, one or more confidence scores for each information of the one or more first information in the one or more electronic documents; and
labelling, by the one or more hardware processors, the one or more first information to classify the one or more first information into at least one of: the one or more first linkage values and one or more second information, based on the one or more confidence scores generated for each information of the one or more first information by one or more predetermined threshold values, wherein the one or more second information are distinct from the one or more first information, and wherein:
the one or more first information are classified as the one or more second information when the one or more confidence scores for the one or more first information, are within the one or more predetermined threshold values; and
the one or more first information are classified as the one or more first linkage values when the one or more confidence scores for the one or more first information exceed the one or more predetermined threshold values.

4. The machine-learning based (ML-based) computing method of claim 3, further comprising generating, by the one or more hardware processors, one or more data objects comprising the one or more confidence scores generated for each information of the one or more first information in the one or more electronic documents,
wherein when a single first information with the one or more confidence scores exceeds the one or more predetermined threshold values, the one or more second linkage values are mapped with the one or more linkage keys in the one or more second databases, and
wherein when two or more first information with the one or more confidence scores exceed the one or more predetermined threshold values, the one or more second linkage values are mapped with the one or more linkage keys in the one or more second databases.

5. The machine-learning based (ML-based) computing method of claim 1, wherein:
when a single linkage key is determined in the one or more second databases, the one or more pairs of the single linkage key and the one or more linkage values comprising the one or more confidence scores are mapped with the one or more second pairs associated with at least one of: the one or more end-state values and the one or more end-state keys in the one or more second databases; and
when two or more linkage keys are determined in the one or more second databases, the one or more pairs of a linkage key and a corresponding linkage value comprising one or more optimum confidence scores are mapped with the one or more second pairs associated with at least one of: the one or more end-state values and the one or more end-state keys in the one or more second databases.

6. The machine-learning based (ML-based) computing method of claim 1, further comprising training, by the one or more hardware processors, the machine learning model, by:
obtaining, by the one or more hardware processors, one or more labelled datasets from the one or more first databases, wherein the one or more labelled datasets comprise the one or more first information extracted from the one or more electronic documents;
selecting, by the one or more hardware processors, one or more features vectors associated with at least one of: the one or more first information extracted from the one or more electronic documents and the metadata extracted from the one or more first information, wherein the machine learning model comprises a random forest based machine learning model;
labelling, by the one or more hardware processors, the one or more first information to classify the one or more first information into at least one of: the one or more first linkage values and the one or more second information, based on one or more pre-configured rules and parameters;
segmenting, by the one or more hardware processors, the one or more labelled datasets into at least one of: one or more training datasets and one or more validation datasets;
training, by the one or more hardware processors, the machine learning model to correlate the one or more feature vectors associated with at least one of: the one or more first information and the metadata, with the one or more first linkage values, based on one or more hyperparameters, wherein the one or more hyperparameters comprise at least one of: max_depth, class_weight, n_estimators, criterion, min_samples_split, max_features, min_samples_leaf, and bootstrap,
wherein the max_depth hyperparameter is configured to control an optimum depth of each decision tree in the random forest based machine learning model, wherein the class_weight hyperparameter is configured to adjust one or more weights of one or more classes in the random forest based machine learning model to control one or more class imbalance errors, wherein the n_estimators hyperparameter is configured to indicate a number of one or more decision trees to be included in the random forest based machine learning model, wherein the criterion hyperparameter is configured to determine quality of a split when the one or more decision trees are generated within the random forest based machine learning model,
wherein the min_samples_split hyperparameter is configured to set a pre-determined number of one or more data points required in a node before the one or more data points split during a tree-building process, wherein the max_features hyperparameter is configured to determine an optimum number of features when the optimum split at each node in the random forest based machine learning model, wherein the min_samples_leaf hyperparameter is configured to indicate the pre-determined number of one or more data points required to generate a leaf node during the tree-building process, and wherein the bootstrap hyperparameter is configured to control whether the one or more data points are sampled when one or more individual decision trees are generated in the random forest based machine learning model;
generating, by the one or more hardware processors, the one or more confidence scores for the one or more first linkage values, based on the trained machine learning model; and
validating, by the one or more hardware processors, the machine learning model based on the one or more validation datasets, wherein validating the machine learning model comprises determining, by the one or more hardware processors, whether one or more metric scores attained by the trained machine learning model, exceeds one or more pre-determined threshold values, wherein the one or more metric scores are associated with one or more validation metrics comprising at least one of: precision metric, recall metric, F 1-score metric, and confusion metric.

7. The machine-learning based (ML-based) computing method of claim 6, further comprising re-training, by the one or more hardware processors, the machine learning model over a plurality of time intervals based on one or more training data, wherein re-training the machine learning model over the plurality of time intervals comprises:
receiving, by the one or more hardware processors, the one or more training data associated with at least one of: the one or more first information extracted from the one or more electronic documents and the metadata extracted from the one or more first information;
adding, by the one or more hardware processors, the one or more training data with the one or more training datasets to generate one or more updated training datasets;
re-training, by the one or more hardware processors, the machine learning model to correlate the one or more feature vectors associated with at least one of: the one or more first information and the metadata, with the one or more first linkage values, wherein the one or more confidence scores are generated based on re-training the machine learning model; and
executing, by the one or more hardware processors, the re-trained machine learning model in a linkage value determining subsystem to determine the one or more first linkage values for the one or more first information associated with the one or more electronic documents.

8. A machine learning based (ML-based) computing system for automatic data mapping for one or more electronic documents, the ML-based computing system comprising:
one or more hardware processors;
a memory coupled to the one or more hardware processors, wherein the memory comprises a plurality of subsystems in form of programmable instructions executable by the one or more hardware processors, and wherein the plurality of subsystems comprises:
a data receiving subsystem configured to receive one or more electronic documents from one or more first databases;
a data extraction subsystem configured to extract one or more data comprising one or more first information from the one or more electronic documents based on an optical character recognition (OCR) conversion process;
a linkage value determining subsystem configured to determine one or more first linkage values for the one or more first information associated with the one or more electronic documents by correlating each information of the one or more first information with one or more metadata extracted from the one or more first information, based on a machine learning model;
a linkage key-value pair mapping subsystem configured to map one or more second linkage values with one or more linkage keys, in one or more second databases by:
determining whether the one or more first linkage values are matched with the one or more second linkage values in the one or more second databases, based on a fuzzy string matching technique;
determining the one or more linkage keys by analyzing one or more columns in the one or more second databases where the one or more first linkage values are matched with the one or more second linkage values; and
mapping the one or more second linkage values with the one or more linkage keys;
an end state mapping subsystem configured to map one or more first pairs associated with at least one of: the one or more second linkage values and the one or more linkage keys, with one or more second pairs associated with at least one of: one or more end-state values and one or more end-state keys in the one or more second databases;
a database updating subsystem configured to update the one or more second databases by adjusting one or more payments associated with the one or more first information based on mapping of the one or more first pairs associated with at least one of: the one or more second linkage values and the one or more linkage keys, with the one or more second pairs associated with at least one of: the one or more end-state values and the one or more end-state keys in the one or more second databases; and
an output subsystem configured to provide an output of the updated one or more second databases with the adjusted one or more payments associated with the one or more first information to one or more first users on a user interface associated with one or more electronic devices.

9. The machine-learning based (ML-based) computing system of claim 8, wherein in extracting the one or more data comprising the one or more first information associated with the one or more electronic documents, the data extraction subsystem is configured to:
extract the one or more first information in form of least one of: one or more fields, one or more headers, one or more keywords, and one or more key numbers, within the one or more electronic documents by analyzing a spatial layout of the one or more first information, based on at least one of: one or more positions, one or more patterns, and one or more locations, of the one or more first information within the one or more electronic documents; and
extract by the one or more hardware processors, the one or more metadata related to one or more coordinates associated with the one or more first information within the one or more electronic documents, wherein:
the one or more first information comprise at least one of: one or more second users associated with the one or more electronic documents, one or more vendors linked to the one or more electronic documents, one or more invoice numbers, one or more invoice amounts corresponding to the one or more invoice numbers, one or more invoice dates, one or more payment details, one or more payment dates, one or more credit and one or more debit numbers, one or more check numbers, and one or more account numbers associated with the one or more electronic documents; and
the one or more metadata related to the one or more coordinates associated with the one or more first information comprise at least one of: one or more top coordinates of one or more pages, one or more bottom coordinates of the one or more pages, one or more left coordinates of the one or more pages, one or more right coordinates of the one or more pages, one or more rows on the one or more pages, one or more sections on the one or more pages, one or more characters present in the one or more pages, one or more top coordinates of the one or more first information, one or more bottom coordinates of one or more first information, one or more left coordinates of the one or more first information, one or more right coordinates of the one or more first information, one or more distances of the one or more first information from a left side of the one or more pages, one or more distances of the one or more first information from a top of the one or more pages, one or more row numbers of the one or more first information.

10. The machine-learning based (ML-based) computing system of claim 8, wherein in determining, by the machine learning model, the one or more first linkage values for the one or more first information associated with the one or more electronic documents, the linkage value determining subsystem is configured to:
generate one or more confidence scores for each information of the one or more first information in the one or more electronic documents; and
label the one or more first information to classify the one or more first information into at least one of: the one or more first linkage values and one or more second information, based on the one or more confidence scores generated for each information of the one or more first information by one or more predetermined threshold values, wherein the one or more second information are distinct from the one or more first information, and wherein:
the one or more first information are classified as the one or more second information when the one or more confidence scores for the one or more first information, are within the one or more predetermined threshold values; and
the one or more first information are classified as the one or more first linkage values when the one or more confidence scores for the one or more first information exceed the one or more predetermined threshold values.

11. The machine-learning based (ML-based) computing system of claim 10, wherein the linkage value determining subsystem is further configured to generate one or more data objects comprising the one or more confidence scores generated for each information of the one or more first information in the one or more electronic documents,
wherein when a single first information with the one or more confidence scores exceeds the one or more predetermined threshold values, the one or more second linkage values are mapped with the one or more linkage keys in the one or more second databases, and
wherein when two or more first information with the one or more confidence scores exceed the one or more predetermined threshold values the one or more second linkage values are mapped with the one or more linkage keys in the one or more second databases.

12. The machine-learning based (ML-based) computing method of claim 8, wherein:
when a single linkage key is determined in the one or more second databases, the one or more pairs of the single linkage key and the one or more linkage values comprising the one or more confidence scores are mapped with the one or more second pairs associated with at least one of: the one or more end-state values and the one or more end-state keys in the one or more second databases; and
when two or more linkage keys are determined in the one or more second databases, the one or more pairs of a linkage key and a corresponding linkage value comprising one or more optimum confidence scores are mapped with the one or more second pairs associated with at least one of: the one or more end-state values and the one or more end-state keys in the one or more second databases.

13. The machine-learning based (ML-based) computing system of claim 8, further comprising a training subsystem configured to train the machine learning model, wherein in training the machine learning model, the training subsystem is configured to:
obtain one or more labelled datasets from the one or more first databases, wherein the one or more labelled datasets comprise the one or more first information extracted from the one or more electronic documents;
select one or more features vectors associated with at least one of: the one or more first information extracted from the one or more electronic documents and the metadata extracted from the one or more first information, wherein the machine learning model comprises a random forest based machine learning model;
label the one or more first information to classify the one or more first information into at least one of: the one or more first linkage values and the one or more second information, based on one or more pre-configured rules and parameters;
segment the one or more labelled datasets into at least one of: one or more training datasets and one or more validation datasets;
train the machine learning model to correlate the one or more feature vectors associated with at least one of: the one or more first information and the metadata, with the one or more first linkage values, based on one or more hyperparameters, wherein the one or more hyperparameters comprise at least one of: max_depth, class _weight, n_estimators, criterion, min _samples _split, max_features, min_samples_leaf, and bootstrap,
wherein the max_depth hyperparameter is configured to control an optimum depth of each decision tree in the random forest based machine learning model, wherein the class _weight hyperparameter is configured to adjust one or more weights of one or more classes in the random forest based machine learning model to control one or more class imbalance errors, wherein the n_estimators hyperparameter is configured to indicate a number of one or more decision trees to be included in the random forest based machine learning model, wherein the criterion hyperparameter is configured to determine quality of a split when the one or more decision tress are generated within the random forest based machine learning model,
wherein the min_samples_split hyperparameter is configured to set a pre-determined number of one or more data points required in a node before the one or more data points split during a tree-building process, wherein the max_features hyperparameter is configured to determine an optimum number of features when the optimum split at each node in the random forest based machine learning model, wherein the min_samples_leaf hyperparameter is configured to indicate the pre-determined number of one or more data points required to generate a leaf node during the tree-building process, and wherein the bootstrap hyperparameter is configured to control whether the one or more data points are sampled when one or more individual decision trees are generated in the random forest based machine learning model;
generate the one or more confidence scores for the one or more first linkage values, based on the trained machine learning model; and
validate the machine learning model based on one or more validation datasets, and wherein in validating the machine learning model, the training subsystem is configured to determine whether one or more metric scores attained by the trained machine learning model, exceeds one or more pre-determined threshold values, wherein the one or more metric scores are associated with one or more validation metrics comprising at least one of: precision metric, recall metric, F1-score metric, and confusion metric.

14. The machine-learning based (ML-based) computing system of claim 13, wherein the training subsystem is further configured to re-train the machine learning model over a plurality of time intervals based on one or more training data, wherein in re-training the machine learning model over the plurality of time intervals, the training subsystem is configured to:
receive the one or more training data associated with at least one of: the one or more first information extracted from the one or more electronic documents and the metadata extracted from the one or more first information;
add the one or more training data with the one or more training datasets to generate one or more updated training datasets;
re-train the machine learning model to correlate the one or more feature vectors associated with at least one of: the one or more first information and the metadata, with the one or more first linkage values, wherein the one or more confidence scores are generated based on re-training the machine learning model; and
execute the re-trained machine learning model in a linkage value determining subsystem to determine the one or more first linkage values for the one or more first information associated with the one or more electronic documents.

15. A non-transitory computer-readable storage medium having instructions stored therein that when executed by a hardware processor, cause the processor to execute operations of:
receiving one or more electronic documents from one or more first databases;
extracting one or more data comprising one or more first information from the one or more electronic documents based on an optical character recognition (OCR) conversion process;
determining one or more first linkage values for the one or more first information associated with the one or more electronic documents by correlating each information of the one or more first information with one or more metadata extracted from the one or more first information, based on a machine learning model;
mapping one or more second linkage values with one or more linkage keys, in one or more second databases by:
determining whether the one or more first linkage values are matched with the one or more second linkage values in the one or more second databases, based on a fuzzy string matching technique;
determining the one or more linkage keys by analyzing one or more columns in the one or more second databases where the one or more first linkage values are matched with the one or more second linkage values; and
mapping the one or more second linkage values with the one or more linkage keys;
mapping one or more first pairs associated with at least one of: the one or more second linkage values and the one or more linkage keys, with one or more second pairs associated with at least one of: one or more end-state values and one or more end-state keys in the one or more second databases;
updating the one or more second databases by adjusting one or more payments associated with the one or more first information based on mapping of the one or more first pairs associated with at least one of: the one or more second linkage values and the one or more linkage keys, with the one or more second pairs associated with at least one of: the one or more end-state values and the one or more end-state keys in the one or more second databases; and
providing an output of the updated one or more second databases with the adjusted one or more payments associated with the one or more first information to one or more first users on a user interface associated with one or more electronic devices.
